(19) **Europäisches Patentamt**

**European Patent Office**

**Office européen des brevets**

(11) **EP 1 462 170 A1**

(12) **EUROPEAN PATENT APPLICATION**

(43) Date of publication:
**29.09.2004 Bulletin 2004/40**

(51) Int Cl.7: **B01J 35/12**, B01J 23/14,
C01B 3/32, C01B 3/40,
B01J 10/00, B01J 19/26,
B01J 19/10

(21) Application number: **03251984.5**

(22) Date of filing: **28.03.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **EUROPEAN COMMUNITY
1049 Brussels (BE)**

(72) Inventors:
• **Edwards, Robert Arthur Henry
21027 Ispra (VA) (IT)**

• **Burghartz, Stephan Maurice Marco Boris
79761 Waldshuttiengen (DE)**

(74) Representative: **Freylinger, Ernest T. et al
Office Ernest T. Freylinger
234, route d'Arlon
B.P. 48
8001 Strassen (LU)**

(54) **Gas-phase chemical reactions using a molten metal catalyst**

(57) A process involving a gas- or vapour-phase chemical reaction, wherein a molten or liquid metal is used to catalyse the reaction. The chemical reaction may involve the transfer of a chemical species selected from oxygen, sulphur, phosphorous, nitrogen and a halogen from the first reactant to the second reactant. The reaction may be a steam-reforming reaction, a water-gas-shift reaction, or an oxidation or partial-oxidation reaction.

**EP 1 462 170 A1**

Printed by Jouve, 75001 PARIS (FR)

**Description**

The present invention relates to the field of catalysis and, in particular, to heterogeneous catalysts for gas- or vapour-phase chemical reactions.

A catalyst is a substance that increases the rate of a chemical reaction without itself undergoing any permanent chemical change. Catalysts that have the same phase as the reactants are homogeneous catalysts, while those having a different phase are heterogeneous catalysts. A catalyst does not alter the position of the equilibrium or increase the yield of products; it merely alters the rate at which equilibrium is achieved or the products are obtained.

There are many chemical reactions in the chemical process industry in which oxygen is transferred from one gas to another. Examples include steam-reforming to produce hydrogen from organic feedstocks, such as methane, petroleum, methanol and ethanol. In a steam-reforming reaction oxygen is transferred from the water to organic components, thus for example:

$$CH_4 + H_2O \xrightarrow{} CO + 3H_2$$

$$CH_4 + 2H_2O \xrightarrow{} CO_2 + 4H_2$$

$$C_2H_5OH + 3H_2O \xrightarrow{} 2CO_2 + 6H_2$$

$$C_2H_5OH + H_2O \xrightarrow{} 2CO + 4H_2$$

Other examples of reactions where oxygen is transferred from one gas to another include water-gas shift reactions ($CO + H_2O \leftrightarrows CO_2 + H_2$) and the oxidation of butane.

Conventional methods of catalysing such reactions rely on solid-state catalysts, particularly catalysts based on precious and noble metals. Because catalyst activity is proportional to the ability of the catalyst to chemisorb reacting species, the activity normally increases as surface area increases. Accordingly, the metal will typically be provided in a finely divided form, for example as a fine metal powder or, alternatively, as a fine dispersion supported on a porous ceramic substrate or monolith.

A number of problems are, however, associated with the use of such solid-state catalysts. The solid catalyst materials are susceptible to poisoning by strongly-adsorbed species, such as Pb, S, and P, especially at low reaction temperatures. At high reaction temperatures, the catalyst tends to become deactivated as a result of solid-state diffusion, for example agglomeration and sintering, which leads to a reduction in the active surface area. It will also be appreciated that the use of, for example, platinum group metals can add significantly to processing costs.

The present invention aims to address at least some of the problems associated with the prior art.

In a first aspect, the present invention provides a process involving a gas- or vapour-phase chemical reaction, wherein a molten or liquid metal is used to catalyse the reaction.

The reactants and products will generally all be in the gas or vapour phase.

The term molten or liquid metal is also intended to encompass metallic liquids.

The molten or liquid metal catalyst may be contacted with the reactants by, for example, generating a spray or mist, or using a bubbler arrangement, a packed column, a plate column or a wetted wall column.

The chemical reaction may, for example, involve the transfer of a chemical species selected from oxygen, sulphur, phosphorous, nitrogen and a halogen (eg F, Cl, Br or I) from the first reactant to the second reactant.

The first reactant may comprise water or steam and the second reactant may comprise one or more chemicals capable of reducing the water or steam, for example a hydrocarbon, an organic vapour, or carbon monoxide. The second reactant preferably comprises a hydrocarbon or carbon-containing gas. Examples include one or more of methane, ethane, ethylene, natural gas, petroleum fractions, methanol and ethanol.

The second reactant may be a gas from another process (such as a gasifier) containing methane as well as carbon monoxide, carbon dioxide and other components.

The process according to the present invention may be applied to a partial oxidation or steam-reforming reaction to produce hydrogen. The process may also be applied to a water-gas-shift reaction.

The first and second reactants will generally react in the gas or vapour phase. In particular, the reaction will generally take place by contact of the catalyst with the first and second reactants in the gas phase.

The first and second reactants may interact or contact with the catalyst by passing or bubbling the reactants through a bath of the molten or liquid metal catalyst. More preferably, the molten or liquid metal catalyst is provided as a mist or spray of droplets to contact with the first and second reactants. This is advantageous because catalyst activity generally increases as surface area increases. Hence, a fine, atomised spray of molten or liquid metal can provide a very high surface area for catalysing the reaction.

The molten or liquid metal catalyst may be provided as a spray or mist by entraining the vapour of a precursor chemical(s) for said molten or liquid metal into the reactant gas flow, which precursor chemical(s) decomposes or is reduced in the reactor.

Although little catalytic activity from a spray of molten or liquid metal would be expected, on the basis that its specific surface area (area/mass of catalyst) is typically much lower than that of a state-of-the-art dispersed solid-metal catalyst, in fact this difference is compensated by the inventors' finding that the activity per unit area can be much higher in the case of the spray because there is a higher density of catalytically active sites on the liquid surface compared to a solid surface, and/or because diffusion is faster at the surface of the liquid than on the solid metal.

The molten or liquid metal catalyst preferably comprises a metal which is capable of being oxidised by the first reactant, and wherein the oxide of said metal is capable of being reduced by the second reactant. The metal preferably has the same or approximately the same oxygen partial pressure in equilibrium with its oxide as the oxygen partial pressure in the reactant gas mixture (calculated assuming that the gas mixture attains equilibrium). Examples of suitable metals include tin, antimony, bismuth, lead, cadmium, tellurium, indium, mercury, germanium and arsenic, including mixtures of two or more thereof. The metal is advantageously alloyed with at least one other more noble metal, i.e. a metal that is more stable with respect to oxidation.

A particularly preferred molten or liquid metal catalyst system for use in the present invention comprises a mixture of tin and lead. The molten or liquid metal catalyst preferably comprises from 10 to 80 wt.% tin, more preferably from 20 to 60 wt.% tin, with the balance lead, together with any unavoidable impurities.

In a second aspect, the present invention provides a process for the production of hydrogen, which process comprises:

(i) providing a reaction chamber;
(ii) feeding a first reactant comprising an oxidising agent into the reaction chamber;
(iii) feeding a second reactant comprising an organic chemical into the reaction chamber, which organic chemical is capable of being oxidized by the first reactant to yield hydrogen; and
(iv) providing a molten or liquid metal catalyst comprising tin or an alloy thereof in the reaction chamber,

wherein the first and second reactants are in the gas- or vapour-phase in the reaction chamber and react to yield hydrogen, the reaction being catalysed by the molten or liquid metal catalyst.

The first reactant preferably comprises oxygen, air, in a substoichiometric quantity compared to complete combustion, or steam, or a mixture of two or more.

The second reactant will typically be selected from natural gas, methane, ethane, ethylene, petroleum fractions, methanol, ethanol, including mixtures of two or more thereof, or a process gas containing also carbon monoxide, carbon dioxide, and other components. The second reactant will generally be provided as a vapor or gas (i.e. in the gas phase).

The first and second reactants may be passed or bubbled through a bath of the molten or liquid metal catalyst to contact therewith. Advantageously, the molten or liquid catalyst is sprayed into the reaction chamber to contact with the first and second reactants. The spray may be achieved by generating a flow of fluid through the reaction chamber, entraining the molten or liquid catalyst in the flow of fluid whereby the molten or liquid catalyst is carried into the chamber with said flow of fluid. Advantageously, the flow of reactant gases is used in a gas-assist atomizer to spray the molten metal into the reaction chamber.

In one embodiment of the present invention the molten or liquid metal catalyst is provided as a spray or mist generated by entraining the vapour of a precursor chemical(s) for said molten or liquid metal into the reactant gas flow, which precursor chemical(s) decomposes or is reduced in the reactor.

In a preferred embodiment, the first and second reactants may be passed through a gas-liquid contactor in order to interact with the molten or liquid metal catalyst. Advantageously, the molten or liquid catalyst is sprayed into the reaction chamber to contact with the first and second reactants. The spray may be achieved by means of forcing the liquid metal through one or more orifices into the reaction chamber, or by entraining the metal in a gas stream, which may advantageously be the stream of one or both reactant gases. The entrained metal droplets can be made into a spray by passing the stream through an orifice. Alternatively, the spray can be formed by the explosive evaporation of reactants injected as a liquid into the molten metal.

Advantageously, ultrasound is used to generate or enhance the spray.

The catalyst advantageously comprises a molten alloy comprising tin and lead. A preferred alloy contains from 10 to 80 wt.% tin, more preferably from 20 to 60 wt.% tin, with the balance lead, together with unavoidable impurities.

The reaction between the first and second reactants may be carried out at a temperature of from 550 to 700°C, more preferably 600 to 650°C, still more preferably 610 to 630°C.

In a third aspect, the present invention provides a gas- or vapour-phase reactor suitable for carrying out steam-reforming reactions, water-gas-shift reactions and oxidation or partial-oxidation reactions, the reactor comprising:

(a) a chamber;
(b) means for introducing a first reactant into the chamber;
(c) means for introducing a second reactant into the chamber; and
(d) means for introducing a molten or liquid metal catalyst into the chamber for catalysing the reaction between the first and second reactants.

The reactor may preferably further comprise means for injecting the molten or liquid metal catalyst into the gas space in the chamber. For example, the molten or liquid metal catalyst may be sprayed into the chamber using, for example, a venturi sprayer, preferably using the first and/or second reactants as a propellant gas. Alternatively, the molten or liquid metal catalyst may be sprayed into the chamber using a gas-assist atomizer, which preferably makes use of the inlet gas flow of the first and/or second reactants. Alternatively, the catalyst spray may be produced by ultrasonically exciting a bath or reservoir of molten metal catalyst. The reactor preferably further comprises means of recovering the metal catalyst from the product gas and returning it to the molten catalyst reservoir.

The reactor preferably further comprises means for vaporising the first and/or second reactants, if these are supplied in the liquid phase.

Heating means may also be provided to keep the reaction at the required temperature, by heating the walls of the chamber and/or the metal/alloy catalyst and/or the gases to react.

In a preferred embodiment, the reactor consists of a heated chamber with a reservoir of molten metal catalyst at the bottom. Reactants are supplied at high pressure in the form of liquids. These are rapidly evaporated, for example by passing the inlet tube through a bath of molten metal. Just before the inlet tube emerges into the gas-space of the reactor, molten metal catalyst is entrained into the gas flow by an ejector-pump or venturi arrangement. At the end of the inlet tube, the combined flow then expands suddenly as it enters the gas-space of the reactor, producing a gas-propelled spray of molten metal. There is further provided a means of recovering metal catalyst droplets from the product gas stream, and means of returning the collected metal catalyst to the metal catalyst reservoir.

It will be appreciated that if the reactants are supplied already in gas form, there is no need to provide the means of evaporation.

The productivity of the reactor based on a molten or liquid metal catalyst depends on the surface of the molten or liquid metal that is exposed to the reactants. The inventors have found that spraying the molten or liquid metal gives a much better effect than bubbling the reactants through the molten or liquid metal.

The molten or liquid metal catalyst may be provided as a spray or mist generated by entraining the vapour of a precursor chemical(s) for said molten metal into the reactant gas flow, which precursor chemical(s) decomposes or is reduced in the reactor.

The reactor preferably further comprises means for vaporising or gasifying the first and/or second reactants. The reactor preferably further comprises means for injecting the first and/or second reactants into the chamber. For example, the first and/or second reactants may be sprayed into the chamber using, for example, a venturi sprayer.

The reactor preferably further comprises means for heating the first and/or second reactants.

Heating means may also be provided to melt the metal/alloy catalyst material prior to it being contacted with the reactants.

In a preferred embodiment, the reactor comprises a fluid inlet entering into the reaction chamber, a fluid supply coupled to the inlet to provide fluid to the chamber through the inlet, a fluid outlet to divert fluid from the chamber, a supply structure coupled to the fluid supply or the fluid inlet to supply molten or liquid metal catalyst material to be entrained in the fluid, whereby, in use, the molten or liquid metal catalyst is carried into the chamber in a flow of fluid to interact with the first and second reactants. In this embodiment, the fluid inlet is advantageously adapted to atomise the molten or liquid metal catalyst as it enters the reaction chamber in the supply fluid.

An ultrasound device may be provided to generate or enhance the atomisation of the molten or liquid metal catalyst.

The reactor preferably further comprises means to recycle molten or liquid metal catalyst material which has exited the reaction chamber through the outlet. In this manner the catalyst material may be regenerated and re-melted where necessary to be injected again into the reaction chamber.

The reactor may comprise a counter-flow column in which the molten or liquid metal catalyst is injected at one end of the column, while the first and second reactants are injected at the other end of the column. This provides a turbulent environment for interaction between the first and second reactants and the catalyst material.

In a fourth aspect, the present invention provides for the use of a molten or liquid metal as a catalyst in a gas- or vapour-phase chemical reaction. The molten or liquid metal is preferably provided in the form of a spray or mist. The metal preferably comprises tin or an alloy of tin and lead. The chemical reaction may be a steam-reforming reaction, a water-gas-shift reaction or an oxidation or partial-oxidation reaction. For example, the reaction may be between ethanol and steam to yield hydrogen.

In the present invention the surface of a molten or liquid metal or alloy is used as the catalyst. This is in contrast to the prior art solid-phase catalysts. The catalyst is unsupported, i.e. it is not supported by a ceramic substrate or monolith.

The present invention will now be described further, by way of example, with reference to the following drawings, in which:

Figure 1 shows a calculation by "*HSC Chemistry for windows*" of the equilibrium gas composition for the initial mixture of 8 mol steam + 1 mol ethanol, as a function of temperature, for 1 bar pressure; and

Figure 2 shows a calculated oxygen partial pressure for the gas mixtures shown in Figure 1.

The composition of the catalyst according to the present invention and the reaction conditions may advantageously be chosen to optimise the catalytic action of the molten or liquid metal by a redox mechanism. Heterogeneous catalysts are often considered to operate by adsorbing a gas species and then allowing reactions with other adsorbed gas species, often via metastable intermediary products. In some cases, it has been recognised that a redox catalysis mechanism may be taking place. For example, copper (II) oxide catalyses the oxidation of traces of hydrogen in the air. A hydrogen molecule arriving on the catalyst surface can reduce the copper (II) oxide to copper (I) oxide or copper (becoming oxidised itself to water). The reduced particle produced is soon re-oxidised back to copper oxide by the oxygen in the air.

The selection of a suitable molten or liquid metal or alloy system for use as a catalyst in the present invention will now be described further, by way of example, with reference to hydrogen production by steam-reforming of ethanol at approximately 200 to 700°C. In this reaction, oxygen is transferred from one gas/vapour to another. The desired reaction products are hydrogen and carbon dioxide.

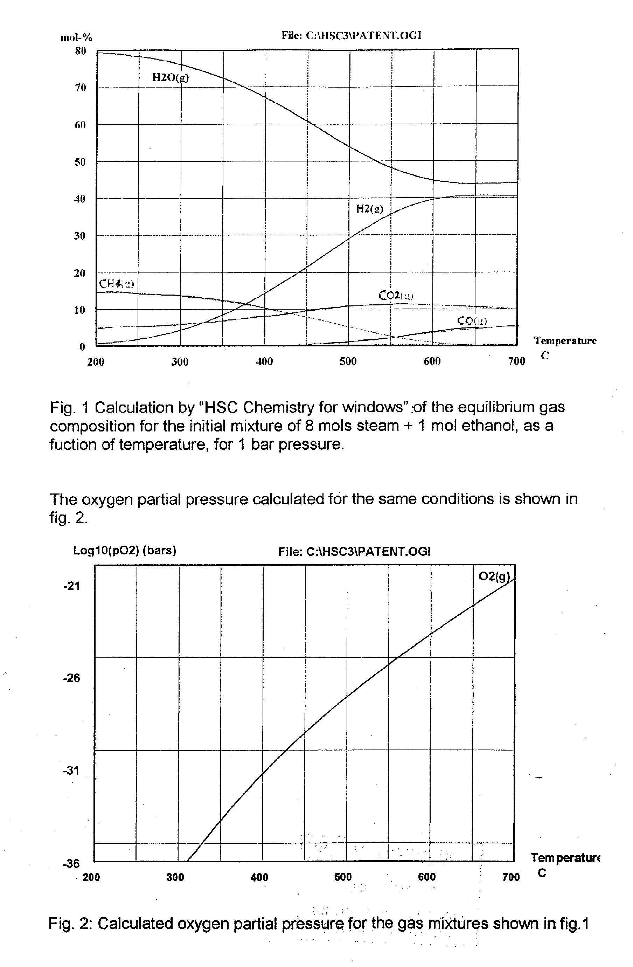

Figure 1 shows the results of a thermodynamic calculation *("HSC Chemistry for windows")* of the equilibrium of what the most stable products are as a function of temperature for an 8:1 water:ethanol mixture. In order to obtain a good hydrogen yield without too much CO, it would be desirable from the thermodynamic point of view to operate at a temperature of from approximately 550 to 600°C. In this connection, conventional catalysts consisting of solid-phase noble metals dispersed on a ceramic substrate start to deactivate at approximately 500°C due to agglomeration.

The redox catalysts mechanism works if the metal can be oxidised by the water, and the metal oxide can be reduced by the organic components. Most metals will not work very well according to the redox mechanism. For example, copper is too noble: it will practically not react with the steam. Zinc, on the other hand, is too active: it will be converted to zinc oxide, and the organic component will be incapable of reducing the oxide.

It has been found that a suitable metal may be selected on the basis that it has the same or substantially the same oxygen partial pressure in equilibrium with its oxide as the partial pressure in the gas mixture.

The maximum amount of hydrogen that can be produced may be determined by, for example, the use of a gas-thermodynamics computer programme such as "*HSC Chemistry for windows*" or "*Solgasmix*" which calculates the most stable distribution of elements between different gas species, for a given set of starting ingredients, and at a given temperature and pressure. The result of such a calculation for an 8:1 molar mixture of steam and ethanol (1 bar pressure) is shown in Figure 1.

The oxygen partial pressure calculated for the same conditions is shown in Figure 2.

Candidate metal catalysts may be investigated by superimposing the oxygen partial pressure in Figure 2 on an Ellingham diagram, which shows the partial pressure of oxygen in equilibrium with metals coexisting with their oxides, as a function of temperature.

We have found that tin is the only metal on the diagram whose line crosses the gas equilibrium line at a suitable temperature, approximately 620°C. At this temperature, an optimum yield is expected: molten tin should react with steam to give the equilibrium hydrogen pressure, and tin oxide can still be reduced by the organic components even if the products reach the equilibrium composition. At temperatures below 620°C, tin oxide becomes more stable. The oxide will not be able to oxidise the organic components as far as the equilibrium would permit, so a low yield of carbon dioxide is expected. At temperatures above 620°C the hydrogen yield will fall as tin can no longer reduce the steam so completely.

If it is desired to conduct the reaction at a lower temperature, while maintaining the optimum yield, we have found that it is necessary to reduce the thermodynamic activity of the metal, so that the oxide is slightly less stable. For tin, we have found that this may suitably be achieved by adding lead. The proportion of lead that brings the $Sn/SnO_2$ equilibrium oxygen potential equal to that in the equilibrium gas mixture was calculated. The calculation takes into account the non-ideal mixing of molten tin and lead, according to the data in Kubaschewski and Alcock "Metallurgical Thermochemistry" 5th ed. Pergamon, 1979.

We have found that the hydrogen yield peaks within 10°C of the temperature calculated for the optimum hydrogen yield according to the simple theory of redox catalysis described above.

There are a number of other unexpected advantages associated with diluting the tin with lead. The mixture becomes less viscous and easier to spray. It is also less corrosive to steel than pure tin. If the gas mixture or the temperature varies slightly so that the tin starts to oxidise, its concentration in the lead falls, restoring the optimum concentration for the operation of the redox catalysis mechanism.

Example

In an experiment, we bubbled ethanol/steam mixture through molten tin-lead mixtures. The bubbling was quite intense and produced also a spray of molten metal droplets. The gas coming out was dried and then injected into a gas chromatograph for analysis. The gas chromatograph had been carefully calibrated for the various components. Comparison was made with a conventional solid bed with various solid catalysts.

We studied various ethanol:water ratios, temperatures and melt compositions. The molten tin-lead gave a better hydrogen yield than any of the solid catalysts. It suppressed the formation of unwanted products such as CO, $CH_4$ and ethylene. At each ethanol:water and tin:lead ratio, the hydrogen yield showed a peak at a certain temperature. This was always close to the calculated optimum temperature for the operation of the redox mechanism.

It will be appreciated that other reactions will have different optimal compositions of tin and lead, depending on the equilibrium oxygen partial pressure in the gas mixture, and the temperature. However, the equilibrium $pO_2$ vs. temperature plot for many organic reaction mixtures turns out to be quite close to the ones provided in the example given above.

For other reactions, it will also be appreciated that tin may not be the most suitable active part of the molten catalyst. Other metal elements including antimony, bismuth, lead, cadmium, tellurium, indium, mercury, germanium and arsenic, including mixtures of two or more thereof, may all yield molten metal catalysts that are useful in a certain range of equilibrium $pO_2$ and temperature, according to the principles of selection described here. Again, each element can advantageously be diluted in another, more noble, metal that forms a molten mixture with it at the temperature of interest.

The principles outlined above for the selection of suitable catalyst metals may equally be applied to analogous reactions where elements such as sulphur and the halogens are exchanged from one reactant to another.

**Claims**

1. A process involving a gas- or vapour-phase chemical reaction, wherein a molten or liquid metal is used to catalyse the reaction.

2. A process as claimed in claim 1, wherein the chemical reaction involves the transfer of a chemical species selected from oxygen, sulphur, phosphorous, nitrogen and a halogen from the first reactant to the second reactant.

3. A process as claimed in claim 1 or claim 2, wherein the reaction is a steam-reforming reaction.

4. A process as claimed in any one of the preceding claims, wherein the first reactant comprises water or steam and the second reactant comprises one or more chemicals capable of reducing the water or steam

5. A process as claimed in any one of the preceding claims, wherein the second reactant comprises a hydrocarbon or a carbon-containing chemical, preferably selected from petroleum, methane, ethane, ethylene, methanol and ethanol, including mixtures of two or more thereof.

6. A process as claimed in claim 1 or claim 2, wherein the reaction is a water-gas-shift reaction.

7. A process as claimed in claim 1, claim 2 or claim 6, wherein the first reactant comprises water or steam and the second reactant comprises carbon monoxide.

8. A process as claimed in claim 1 or claim 2, wherein the reaction is an oxidation or partial-oxidation reaction.

9. A process as claimed in claim 1, claim 2 or claim 8, wherein the first reactant comprises oxygen or air and the second reactant comprises one or more organic chemicals, preferably selected from petroleum, methane, ethane, ethylene, methanol and ethanol, including mixtures of two or more thereof.

10. A process as claimed in any one of the preceding claims, wherein the first and second reactants are passed through a bath of the molten or liquid metal catalyst to contact therewith, or wherein the molten or liquid metal catalyst is provided as a spray or mist to contact with the first and second reactants, or wherein the molten or liquid metal catalyst is provided as a spray or mist generated by entraining the vapour of a precursor chemical(s) for said molten or liquid metal into the reactant gas flow, which precursor chemical(s) decomposes or is reduced in the reactor.

11. A process as claimed in any one of the preceding claims, wherein the molten or liquid metal catalyst comprises a metal which is capable of being oxidised by the first reactant, and wherein the oxide of said metal is capable of being reduced by the second reactant, and wherein, at the temperature of the reaction, said metal preferably has an oxygen partial pressure in equilibrium with its oxide of the same order of magnitude as the oxygen partial pressure in the gas.

12. A process as claimed in any one of the preceding claims, wherein said metal is selected from tin, antimony, bismuth, lead, cadmium, tellurium, indium, mercury, germanium and arsenic, including mixtures of two or more thereof, and wherein said metal is preferably alloyed with at least one other more noble metal.

13. A process as claimed in any one of the preceding claims, wherein the molten or liquid metal catalyst comprises a mixture of tin and lead, preferably from 10 to 80 wt.% tin, more preferably from 20 to 60 wt. % tin.

14. A process for the production of hydrogen, which process comprises:

(i) providing a reaction chamber;
(ii) feeding a first reactant comprising an oxidising agent into the reaction chamber;
(iii) feeding a second reactant comprising an organic chemical into the reaction chamber, which organic chemical is capable of being oxidized by the first reactant to yield hydrogen; and
(iv) providing a molten or liquid metal catalyst comprising tin or an alloy thereof in the reaction chamber,

wherein the first and second reactants are in the gas- or vapour-phase in the reaction chamber and react to yield hydrogen, the reaction being catalysed by the molten or liquid metal catalyst.

15. A process as claimed in claim 14, wherein the first reactant comprises one or more of water, steam, oxygen and/or air, including mixtures of two or more thereof.

16. A process as claimed in claim 14 or claim 15, wherein the second reactant is selected from methane, ethane, ethylene, petroleum, methanol and ethanol, including mixtures of two or more thereof.

17. A process as claimed in any one of claims 14 to 16, wherein the first and second reactants are passed through a bath of the molten or liquid metal catalyst to contact therewith.

18. A process as claimed in any one of claims 14 to 17, wherein the molten or liquid metal catalyst is provided as a spray or mist generated by entraining the vapour of a precursor chemical(s) for said molten or liquid metal into the reactant gas flow, which precursor chemical(s) decomposes or is reduced in the reactor.

19. A process as claimed in any one of claims 14 to 18, wherein the molten or liquid metal catalyst is sprayed into the reaction chamber to contact with the first and second reactants, and wherein said spray is preferably achieved by generating a flow of fluid through the reaction chamber, entraining the molten or liquid metal catalyst in the flow of fluid, whereby the molten or liquid metal catalyst is carried into the chamber with said flow of fluid.

20. A process as claimed in claim 19, wherein the flow of reactant gases is used in a gas-assist atomizer to spray the molten metal into the reaction chamber.

21. A process as claimed in any one of claims 14 to 20, wherein the molten or liquid metal catalyst comprises tin and lead, preferably containing from 10 to 80 wt.% tin, and more preferably from 20 to 60 wt.% lead.

22. A process as claimed in any one of claims 14 to 21, wherein ultrasound is used to generate or enhance the spray.

23. A process as claimed in any one of claims 14 to 22, wherein the reaction between the first and second reactants is carried out at a temperature of from 550 to 700°C, more preferably from 600 to 650°C, still more preferably from 610 to 630°C.

24. A gas- or vapour-phase reactor suitable for carrying out steam-reforming reactions, water-gas-shift reactions and oxidation or partial-oxidation reactions, the reactor comprising:

(a) a chamber;
(b) means for introducing a first reactant into the chamber;
(c) means for introducing a second reactant into the chamber; and
(d) means for introducing a molten or liquid metal catalyst into the chamber for catalysing the reaction between the first and second reactants.

25. A reactor as claimed in claim 24, further comprising means for spraying the molten or liquid metal catalyst into the chamber, said means preferably comprising a venturi sprayer or a gas-assist atomizer, which preferably makes use of the inlet gas flow of the first and/or second reactants.

26. A reactor as claimed in any one of claim 24 or claim 25, wherein the molten or liquid metal catalyst is provided as a spray or mist generated by entraining the vapour of a precursor chemical(s) for said molten metal into the reactant gas flow, which precursor chemical(s) decomposes or is reduced in the reactor.

27. A reactor as claimed in any one of claims 24 to 26, further comprising means for vaporising or gasifying the first and/or second reactants and/or means for heating the first and/or second reactants.

28. A reactor as claimed in any one of claims 24 to 27 comprising a fluid inlet entering into the reaction chamber, a fluid supply coupled to the inlet to provide fluid to the chamber through the inlet, a fluid outlet to divert fluid from the chamber, a supply structure coupled to the fluid supply or the fluid inlet to supply molten or liquid metal catalyst material to be entrained in the fluid, whereby, in use, the molten or liquid metal catalyst is carried into the chamber in a flow of fluid to interact with the first and second reactants, wherein the fluid inlet is preferably adapted to atomise the molten or liquid metal catalyst as it enters the reaction chamber in the supply fluid.

29. A reactor as claimed in any one of claims 24 to 28, wherein an ultrasonic device is provided for generating or enhancing atomisation of the molten or liquid metal catalyst.

30. A reactor as claimed in any one of claims 24 to 29, further comprising means to recycle molten or liquid metal catalyst material.

Fig. 1 Calculation by "HSC Chemistry for windows" of the equilibrium gas composition for the initial mixture of 8 mols steam + 1 mol ethanol, as a fuction of temperature, for 1 bar pressure.

The oxygen partial pressure calculated for the same conditions is shown in fig. 2.

Fig. 2: Calculated oxygen partial pressure for the gas mixtures shown in fig.1

**European Patent Office**

## EUROPEAN SEARCH REPORT

Application Number

EP 03 25 1984

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 216 199 A (ERICKSON DONALD C) 5 August 1980 (1980-08-05)<br><br>* column 2, line 51 - line 66 *<br>* column 4, line 33 - line 34 *<br>* column 5, line 64 - column 6, line 20 *<br>* claims 2,3,13 *<br>--- | 1-12, 14-20, 24-28,30 | B01J35/12 B01J23/14 C01B3/32 C01B3/40 B01J10/00 B01J19/26 B01J19/10 |
| X | US 4 126 668 A (ERICKSON DONALD C) 21 November 1978 (1978-11-21)<br><br>* column 1, line 31 - line 42 *<br>* column 5, line 9 - line 20 *<br>* column 6, line 3 - line 15 *<br>--- | 1-12, 14-20, 24-28,30 | |
| X | WO 02 070403 A (ALCHEMIX CORP) 12 September 2002 (2002-09-12)<br><br><br>* page 2, line 19 - page 4, line 5 *<br>* page 18, line 24 - page 19, line 34 *<br>--- | 1-5, 7-12, 14-20, 24-28 | |
| X | US 3 545 962 A (THEMELIS NICKOLAS J ET AL) 8 December 1970 (1970-12-08)<br><br>* column 2, line 33 - column 3, line 23 *<br>--- | 1-5,10, 11, 14-19, 24-28 | **TECHNICAL FIELDS SEARCHED (Int.Cl.7)**<br><br>B01J<br>C01B |
| X | US 3 821 362 A (SPACIL H) 28 June 1974 (1974-06-28)<br><br>* the whole document *<br>--- | 1-12, 14-20, 23-28,30 | |
| X | US 3 979 505 A (SEITZER WALTER H) 7 September 1976 (1976-09-07)<br><br>* the whole document *<br>----- | 1-12, 14-20, 23-28,30 | |

The present search report has been drawn up for all claims

| Place of search | Date of completion of the search | Examiner |
|---|---|---|
| MUNICH | 1 August 2003 | Besselmann, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 25 1984

This annex lists the patent family members relating to the patent documents cited in the above-mentioned European search report.
The members are as contained in the European Patent Office EDP file on
The European Patent Office is in no way liable for these particulars which are merely given for the purpose of information.

01-08-2003

| Patent document cited in search report | | Publication date | Patent family member(s) | | Publication date |
|---|---|---|---|---|---|
| US 4216199 | A | 05-08-1980 | NONE | | |
| US 4126668 | A | 21-11-1978 | NONE | | |
| WO 02070403 | A | 12-09-2002 | US | 2002127178 A1 | 12-09-2002 |
| | | | US | 2002139049 A1 | 03-10-2002 |
| | | | US | 2002124466 A1 | 12-09-2002 |
| | | | US | 2002127165 A1 | 12-09-2002 |
| | | | US | 2003072705 A1 | 17-04-2003 |
| | | | WO | 02070403 A1 | 12-09-2002 |
| | | | US | 2003130360 A1 | 10-07-2003 |
| US 3545962 | A | 08-12-1970 | BE | 731340 A | 15-09-1969 |
| | | | GB | 1178120 A | 21-01-1970 |
| | | | US | 3604698 A | 14-09-1971 |
| US 3821362 | A | 28-06-1974 | DE | 2301178 A1 | 19-07-1973 |
| | | | FR | 2167995 A1 | 24-08-1973 |
| | | | GB | 1396617 A | 04-06-1975 |
| US 3979505 | A | 07-09-1976 | NONE | | |

EPO FORM P0459

For more details about this annex : see Official Journal of the European Patent Office, No. 12/82